Europäisches Patentamt

European Patent Office

Office européen des brevets

(11) Veröffentlichungsnummer: **0 221 882**
**A1**

(12) # EUROPÄISCHE PATENTANMELDUNG

(21) Anmeldenummer: **86890269.3**

(22) Anmeldetag: **01.10.86**

(51) Int. Cl.⁴: **E 21 C 35/04**

(30) Priorität: **04.11.85 AT 3176/85**

(43) Veröffentlichungstag der Anmeldung:
**13.05.87 Patentblatt 87/20**

(84) Benannte Vertragsstaaten:
**CH DE FR GB IT LI**

(71) Anmelder: **VOEST-ALPINE Aktiengesellschaft**
**Friedrichstrasse 4**
**A-1011 Wien(AT)**

(72) Erfinder: **Schellenberg, Eduard, Dipl.-Ing.**
**Liebermannweg 32**
**A-4020 Linz(AT)**

(72) Erfinder: **Steinbrucker, Gerhard, Dipl.-Ing.**
**Bessemerstrasse 30**
**A-8740 Zeltweg(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Einrichtung zum Schutz der Ladeeinrichtung und/oder des Schrämarmes einer Schrämmaschine vor Kollision.**

(57) Die Einrichtung zum Verhindern der Kollision eines Schramarmes (5) mit einer Laderampe (9) einer Schrämmaschine (1) beinhaltet eine in sich geschlossene Leitung (14), welche zwischen Schrämarm (5) und Laderampe (9) verlegt ist. Nahe dem unteren Ende (16) dieser geschlossenen Leitung (14), welche mit Flüssigkeit gefüllt ist, befindet sich ein Drucksensor (17), dessen Signale einer Auswerteelektronik zugeführt werden. Je nach gemessenem Druckwert, welcher dem vertikalen Abstand zwischen Schrämarm (5) und Laderampe (9) proportional ist, erfolgt eine Auslösung eines Alarmes oder ein Eingriff in die Steuerung des hydraulischen Antriebes des Schrämarmes (5) bzw. der Laderampe (9). Der Antrieb des Schrämarmes (5) in Richtung des Doppelpfeiles (6) in vertikaler Richtung erfolgt über hydraulische Zylinderkolbenaggregate (7), wohingegen der Antrieb zum Verschwenken der Laderampe (9), im Sinne des Doppelpfeiles (10) durch hydraulische Zylinderkolbenaggregate (11) sichergestellt ist.

FIG.1

EP 0 221 882 A1

## Einrichtung zum Schutz der Ladeeinrichtung und/oder des Schrämmarmes einer Schrämmaschine vor Kollision

Die Erfindung bezieht sich auf eine Einrichtung zum Schutz der Ladeeinrichtung und/oder des Schrämarmes einer Schrämmaschine vor Kollision bei einer Bewegung von Schrämarm und Ladeeinrichtung gegeneinander.

Aus der FR-PS 23 23 002 ist eine Vorrichtung bekanntgeworden, bei der mittels einer Gleitkupplung ein Blockieren der Ladearme einer Laderampe einer Schrämmaschine verhindert werden soll. Die DE-OS 33 22 570 zeigt und beschreibt eine Einrichtung zur Begrenzung der Drehbewegung des Auslegers einer Schrämmaschine, wobei durch ein Steuerelement der Antrieb bei Erreichen eines bestimmten Maßes der Drehbewegung unterbrochen wird und die Bewegungsrichtung umgekehrt wird.

Zum Schutz von Ladeeinrichtungen und im besonderen der empfindlichen Ladearme einer Laderampe einer Schrämmaschine wurde bereits vorgeschlagen, Anschlagleisten vorzusehen, welche mit dem zumeist allseits schwenkbaren Schrämarm einer Schrämmaschine in Kollision gelangen können, bevor der Schrämarm oder der Schrämkopf Teile der Ladeeinrichtung beschädigt, wie dies beispielsweise FR-PS 2 323 003 entnommen werden kann. Es ist weiters bekannt, anstelle derartiger mechanischer Anschläge hydraulische Taster zu verwenden, welche unmittelbar den Schwenkantrieb der Laderampe oder des Schrämarmes stoppen. Schließlich ist es bekannt, die Winkelstellung von Schrämarm und Laderampe beispielsweise durch hydraulische Zylinderkolbenaggregate zu erfassen, wie dies beispielsweise der EP-A-28 593 entnommen werden kann, wobei die bei einer Schwenkbewegung des Schrämarmes oder der Laderampe aus diesem Zylinderkolbenaggregat verdrängte Flüssigkeitsmenge bei unzulässiger Annäherung der beiden Bauteile ein Absperrventil für den hydraulischen Antrieb der Laderampe oder des Schrämarmes betätigt.

Alle bekannten Konstruktionen haben gemeinsam, daß sie einen relativ hohen baulichen Aufwand bedingen und daß das nachträgliche Ausrüsten von Schrämmaschinen mit derartigen Einrichtungen nicht ohne weiteres möglich ist.

Die Erfindung zielt nun darauf ab eine einfache und auch noch nachrüstbare Einrichtung der eingangs genannten Art zu schaffen, welche rasch an unterschiedliche geometrische Bedingungen bei der Verschwenkung einer Laderampe bzw. eines Schrämarmes angepaßt werden kann. Zur Lösung dieser Aufgabe besteht die Erfindung im wesentlichen darin, daß der schwenkbare Schrämarm einen mit Flüssigkeit gefüllten geschlossenen Kanal, insbesondere eine Rohr- oder Schlauchleitung, aufweist, welche(r) über eine flexible Leitung mit einem geschlossenen Kanal, einer Rohr- oder Schlauchleitung an oder in der Laderampe verbunden ist, wobei innerhalb dieser geschlossenen Leitung ein Drucksensor angeordnet ist, dessen Signalleitungen mit einer Anzeigevorrichtung für den gegenseitigen Abstand von Schrämarm und Laderampe und/oder dem Schwenkantrieb des Schrämarmes und/oder der Laderampe verbunden ist. Dadurch, daß in einer derartigen geschlossenen Leitung ein Drucksensor angeordnet ist, läßt sich der jeweils zulässige Grenzdruck frei wählen und in Abhängigkeit von der vorliegenden Maschinengeometrie bestimmen. Es läßt sich der zulässige Abstand zwischen Laderampe und Schrämarm, beispielsweise beim Austausch von Greifern oder Ladeeinrichtungen an der Oberseite der Laderampe, rasch den neuen geometrischen Bedingungen anpassen und auch in diesem Falle noch eine Kollision zwischen Laderampe und Schrämarm mit Sicherheit vermeiden. Vor allen Dingen aber erlaubt die erfindungsgemäße Konstruktion eine einfache Nachrüstung beliebiger Schrämmaschinen mit einer derartigen Einrichtung, um die Kollision von Laderampe und Schrämarm zu verhindern.

Das Drucksignal läßt sich am besten erfassen, wenn der Drucksensor, wie es einer bevorzugten Ausgestaltung entspricht, am unteren Ende der geschlossenen Leitung angeordnet ist. Der auf einen derartigen Sensor wirksam werdende hydrostatische Druck der Flüssigkeit in der geschlossenen Leitung verringert sich bei sich verringerndem Abstand zwischen Schrämarm und Laderampe und es kann ein beliebiger kritischer Grenzwert vorgegeben werden, bei welchem ein Warnsignal abgegeben werden soll oder die Bewegung von Laderampe und Schrämarm zueinander gestoppt werden soll.

Die mit Flüssigkeit gefüllte Leitung kann in einfacher Weise geschützt im Inneren der Laderampe verlegt werden, wobei vorzugsweise das obere Ende der geschlossenen Leitung nahe den rotierbar gelagerten Schrämköpfen angeordnet ist und vorteilhafterweise das untere Ende der geschlossenen Leitung nahe dem vorderen Ende bzw. der Pflugspitze der Ladeeinrichtung angeordnet ist. Bei einer derartigen Anordnung ergibt sich bei den meisten Schrämmaschinen der eingangs genannten Art der größte relative Unterschied im Drucksignal bei Annäherung der beiden Teile aneinander. Die absolute Größe des Drucksignals ist naturgemäß von der Dichte der verwendeten Flüssigkeit abhängig. In besonders vorteilhafter Weise könnte daher Quecksilber als Flüssigkeit in der geschlossenen Leitung eingesetzt werden. Aus Gründen der Betriebssicherheit ist es jedoch vorteilhaft, daß die Leitung mit Ölen oder Wasser gefüllt ist.

In besonders vorteilhafter Weise kann die erfindungsgemäße Einrichtung auch dazu verwendet werden, die Verwindung einer Laderampe, welche zum Zwecke des Anhebens des Vorderendes einer Schrämmaschine unter die Ebene der Laufflächen des Fahrwerkes der Schrämmaschine abgesenkt wird, gleichfalls zu berücksichtigen. Wenn durch Absenken der Laderampe unter die Ebene der Laufflächen der Raupen des Fahrwerkes der Schrämmaschine eine Anhebung des Vorderendes der Schrämmaschine vorgenommen wird, kann je nach Belastung der Maschine eine Verwindung der Laderampe relativ zum Rahmen der Maschine auftreten, welche in der Folge dazu führen könnte, daß bei einem Verschwenken des Schrämarmes in im wesentlichen horizontaler Richtung zu einer Seite der Längsmitte der Schrämmaschine eine mögliche Kollision früher eintreten kann als zur anderen Seite der Längsmitte. Um derartige Verwindungen gleichfalls zu erfassen, ist die Ausbildung mit Vorteil so getroffen, daß außerhalb der Längsmitte der Schrämmaschine zu beiden Seiten derselben je eine geschlossene Leitung angeordnet ist. Auf diese Weise müssen zwei Drucksignale miteinander verglichen werden, wobei bei Gleichheit der beiden Drucksignale davon ausgegangen werden kann, daß eine Verwindung nicht eingetreten ist. Eine mehr oder minder große Ungleichheit der zu beiden Seiten der Maschine gemessenen Drucksignale deutet auf eine Verwindung hin, welche in der Folge bei der Auswertung der Signale in einem Mikroprozessor berücksichtigt werden kann. Die Auswertung der Signale des Drucksensors kann in einfacher Weise so getroffen sein, daß die Signalleitungen des oder der Drucksensoren mit einem Komparator bzw. Mikroprozessor verbunden sind, welcher aufgrund eines Ist/Solldruck-Vergleiches ein Abschaltsignal abgibt, wobei bei Verwendung von zwei außermittig angeordneten Drucksensoren zusätzlich auch noch die Verwindung der Laderampe berücksichtigt werden kann. Eine besonders einfache Ausgestaltung ergibt sich dann, wenn der oder die Drucksensoren als Grenzwertdruckschalter ausgebildet ist/sind, wobei in diesen Fällen eine Auswerteelektronik entfallen kann. Der Grenzwertdruckschalter spricht in der Regel auf einen bestimmten vorgegebenen Druck an, so daß eine flexible Anpassung an verschiedene Geometrien besser durch Verwendung eines Mikroprozessors und von Drucksensoren mit kontinuierlicher Druckinformation erzielt werden kann. In einfachen Fällen kann jedoch mit dem baulich einfacheren Grenzwertdruckschalter das Auslangen gefunden werden.

Die Erfindung wird nachfolgend anhand von in der Zeichnung schematisch dargestellten Ausführungsbeispielen näher erläutert. In dieser zeigen Fig.1 eine schematische Seitenansicht einer Schrämmaschine mit der erfindungsgemäßen Einrichtung, Fig.2 und 3 verschiedene Positionen des Schrämarmes einer derartigen Schrämmaschine relativ zur Laderampe einer derartigen Schrämmaschine, Fig.4 eine Ausbildung mit einem Grenzwertdruckschalter und Fig.5 eine Ausbildung mit einem Drucksensor, welcher das kontinuierliche Erfassen der Druckwerte ermöglicht.

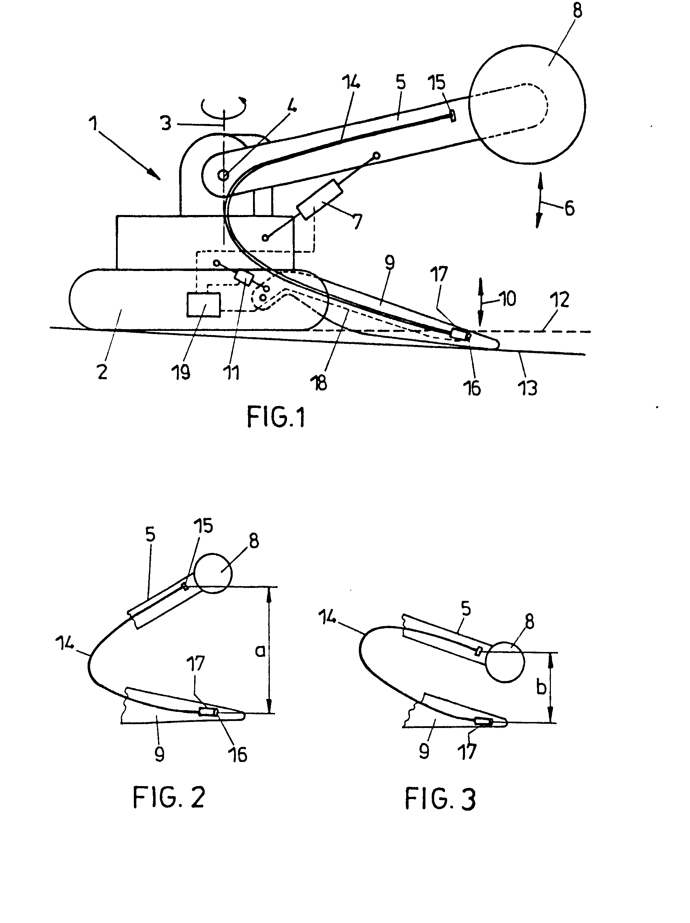

In Fig.1 ist eine Schrämmaschine 1 dargestellt, welche ein Raupenfahrwerk 2 aufweist. Am Rahmen der Schrämmaschine ist um eine im wesentlichen vertikale Achse 3 und eine im wesentlichen horizontale Achse 4 schwenkbar ein Schrämarm 5 angelenkt. Der hydraulische Antrieb für das Aufwärts- und Abwärtsschwenken in Richtung des Doppelpfeiles 6 ist mit 7 bezeichnet. Am freien Ende des Schrämarmes 5 sind rotierbar gelagerte Schrämköpfe 8 vorgesehen, welche über einen gesonderten Rotationsantrieb verfügen.

Die Schrämmaschine 1 weist weiters eine Laderampe 9 auf, welche gleichfalls im Sinne des Doppelpfeiles 10 anhebbar und absenkbar ist. Der hydraulische Antrieb für das Anheben bzw. Absenken der Laderampe 9 ist mit 11 bezeichnet.

Bei der Darstellung nach Fig.1 ist die Laderampe 9 unter die durch die Lauffläche der Raupen des Raupenfahrwerkes 2 definierte Ebene 12 abgesenkt. Die Sohlenebene ist hiebei mit 13 bezeichnet. Das Vorderende des Raupenfahrwerkes 2 wird hiebei angehoben und je nach Bodenbeschaffenheit oder Position der Schrämmaschine kann dies eine Verwindung der Laderampe 9 relativ zum Rahmen der Schrämmaschine 1 bedeuten. Zwischen Schrämarm 5 und Laderampe 9 ist ein von einer geschlossenen Schlauchleitung 14 gebildetes Leitungssystem verlegt, dessen oberes Vorderende 15 nahe den Schrämköpfen 8 angeordnet ist. Das untere Ende dieser geschlossenen Leitung 14 ist mit 16 bezeichnet und liegt nahe der Pflugspitze der Laderampe 9. In diese geschlossene Leitung 14 ist am unteren Ende 16 ein Drucksensor 17 eingeschaltet, dessen Meßwerte über eine Signalleitung 18 einer elektronischen Auswerteschaltung 19 zugeführt sind. Je nach den gemessenen Druckwerten wird von der elektronischen Auswerteschaltung 19 ein Steuersignal an die hydraulischen Schwenkantriebe 7 bzw. 11 für die Verschwenkung des Schrämarmes 5 bzw. der Laderampe 9 zur Verfügung gestellt.

Für die Erfassung der Verwindung der Laderampe sind zu beiden Seiten der Längsmitte der Maschine zwei gesonderte geschlossene Leitungen 14 mit gesondertem Drucksensor 17 erforderlich, wobei die Differenz der Meßwerte der Drucksensoren 17 ausgewertet werden kann.

Bei den Darstellungen nach Fig.2 und 3 sind zwei unterschiedliche Stellungen des Schrämarmes 5 relativ zur Laderampe 9 schematisch dargestellt. Bei der Darstellung nach Fig.2 beträgt der Abstand der Enden 15 und 16 der geschlossenen Leitung 14 a. Aufgrund des relativ großen gegenseitigen Abstandes wird vom Sensor 17 ein relativ großer hydrostatischer Druck gemessen. Dieser Druckwert, welcher vom Sensor 17 gemessen wird, verkleinert sich, wenn, wie in Fig.3 dargestellt, der Schrämarm 5 abgesenkt wird, da dann der für den hydrostatischen Druck wirksame Abstand auf b reduziert wird. Der Druckmeßwert des Sensors 17 kann bei einem weiteren Absenken des Schrämarmes 5 und damit der Schrämköpfe 8 in der Folge einen Alarm auslösen oder den Antrieb für das Verschwenken von Schrämarm oder Laderampe stoppen. Das Drucksignal ist proportional der Dichte der in der Leitung 14 enthaltenen Flüssigkeit und dem Vertikalabstand bzw. der Höhendifferenz zwischen oberem und unterem Ende der geschlossenen Leitung 14.

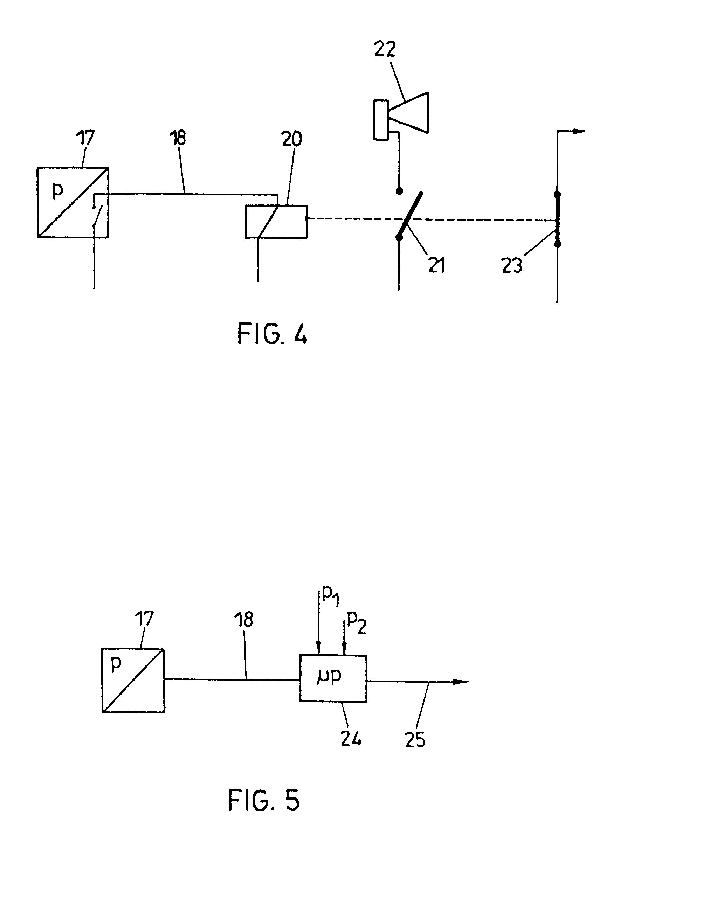

Die prinzipielle Auswertung von Signalen derartiger Drucksensoren 17 ist in den Fig.4 und 5 näher erläutert.

Bei der Darstellung nach Fig.4 ist der Drucksensor 17 als Grenzwertschalter ausgebildet. Nach Erreichen des Grenzwertes wird ein Relais 20 angesteuert, welches in der Folge einen Schalter 21 zu einer Signaleinrichtung 22 schließt und damit einen Alarm auslöst und/oder einen Schalter 23 in der Steuerung der Hydraulik für das Anheben bzw. Absenken des Schrämarmes oder der Laderampe öffnet und auf diese Weise eine weitere Annäherung verhindert.

Bei der Darstellung nach Fig.5 ist der Drucksensor 17 als kontinuierliche Druckwerte abtastender Sensor ausgebildet, dessen Signale über eine Signalleitung 18 einem Mikroprozessor 24 zugeführt werden. Der Mikroprozessor weist zwei Eingänge für vorwählbare Grenzwerte auf, wobei ein erster Grenzwert $P_1$ den Grenzdruck für die mögliche Kollision und ein zweiter vorwählbarer Grenzwert $P_2$ eine mögliche Gefahr signalisieren kann, welche noch nicht notwendigerweise eine unmittelbare Kollision bedeutet. Der Mikroprozessor gibt aufgrund eines Istdruck- und Solldruckvergleiches ein Abschaltsignal über eine Steuerleitung 25 aus.

Patentansprüche:

1. Einrichtung zum Schutz der Ladeeinrichtung und/oder des Schrämarmes (5) einer Schrämmaschine (1) vor Kollision bei einer Bewegung von Schrämarm (5) und Ladeeinrichtung gegeneinander, dadurch gekennzeichnet, daß der schwenkbare Schrämarm (5) einen mit Flüssigkeit gefüllten geschlossenen Kanal, insbesondere eine Rohr- oder Schlauchleitung aufweist, welche(r) über eine flexible Leitung (14) mit einem geschlossenen Kanal, einer Rohr- oder Schlauchleitung an oder in der Laderampe (9) verbunden ist, wobei innerhalb dieser geschlossenen Leitung (14) ein Drucksensor (17) angeordnet ist, dessen Signalleitungen (18) mit einer Anzeigevorrichtung für den gegenseitigen Abstand von Schrämarm (5) und Laderampe (9) und/oder dem Schwenkantrieb (7,11) des Schrämarmes (5) und/oder der Laderampe (9) verbunden ist.

2. Einrichtung nach Anspruch 1, dadurch gekennzeichnet, daß der Drucksensor (17) am unteren Ende (16) der geschlossenen Leitung (14) angeordnet ist.

3. Einrichtung nach Anspruch 1 oder 2, dadurch gekennzeichnet, daß das obere Ende (15) der geschlossenen Leitung (14) nahe den rotierbar gelagerten Schrämköpfen (8) angeordnet ist.

4. Einrichtung nach einem der Ansprüche 1, 2 oder 3, dadurch gekennzeichnet, daß das untere Ende (16) der geschlossenen Leitung (14) nahe dem vorderen Ende bzw. der Pflugspitze der Ladeeinrichtung (9) angeordnet ist.

5. Einrichtung nach einem der Ansprüche 1 bis 4, dadurch gekennzeichnet, daß die Leitung (14) mit Ölen oder Wasser gefüllt ist.

**0221882**

6. Einrichtung nach einem der Ansprüche 1 bis 5, dadurch gekennzeichnet, daß außerhalb der Längsmitte der Schrämmaschine (1) zu beiden Seiten derselben je eine geschlossene Leitung (14) angeordnet ist.

7. Einrichtung nach einem der Ansprüche 1 bis 6, dadurch gekennzeichnet, daß die Signalleitungen (18) des oder der Drucksensoren (17) mit einem Komparator bzw. Mikroprozessor (24) verbunden sind, welcher aufgrund eines Ist/Solldruck-Vergleiches ein Abschaltsignal abgibt.

8. Einrichtung nach einem der Ansprüche 1 bis 7, dadurch gekennzeichnet, daß der oder die Drucksensoren (17) als Grenzwertdruckschalter ausgebildet ist/sind.

FIG.1

FIG. 2

FIG. 3

FIG. 4

FIG. 5

**Europäisches Patentamt**

# EUROPÄISCHER RECHERCHENBERICHT

**0221882**

Nummer der Anmeldung

EP 86 89 0269

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | EP-A-0 028 593 (VOEST-ALPINE) <br> * Zusammenfassung * | 1 | E 21 C 35/04 |
| | --- | | |
| D,A | DE-A-3 322 570 (DOBSON PARK INDUSTRIES) <br> * Zusammenfassung * | 1 | |
| | --- | | |
| D,A | FR-A-2 323 002 (VEREINIGTE ÖSTERREICHISCHE EISEN- UND STAHLWERKE-ALPINE MONTON) <br> * Anspruch 1 * | 1 | |
| | --- | | |
| D,A | FR-A-2 323 003 (VEREINIGTE ÖSTERREICHISCHE EISEN- UND STAHLWERKE-ALPINE MONTAN) <br> * Anspruch 1 * | 1 | RECHERCHIERTE SACHGEBIETE (Int Cl 4) |
| | --- | | |
| A | GB-A-2 121 852 (COAL INDUSTRY (PATENTS)) <br> * Zusammenfassung * | 1 | E 21 C 35/04 <br> E 21 C 31/00 <br> E 21 C 27/00 <br> E 21 D 9/10 |
| | ----- | | |

Der vorliegende Recherchenbericht wurde für alle Patentansprüche erstellt.

| Recherchenort <br> BERLIN | Abschlußdatum der Recherche <br> 05-12-1986 | Prüfer <br> ZAPP E |
|---|---|---|